(19) Europäisches Patentamt / European Patent Office / Office européen des brevets

(11) **EP 4 628 361 A1**

(12) **EUROPEAN PATENT APPLICATION**
published in accordance with Art. 153(4) EPC

(43) Date of publication:
08.10.2025 Bulletin 2025/41

(21) Application number: 23897685.6

(22) Date of filing: 24.11.2023

(51) International Patent Classification (IPC):
*B60Q 1/04* (2006.01)    *B60Q 1/14* (2006.01)
*F21S 41/143* (2018.01)    *F21S 41/153* (2018.01)
*F21S 41/663* (2018.01)    *F21V 23/00* (2015.01)
*F21W 102/155* (2018.01)    *F21Y 115/10* (2016.01)

(52) Cooperative Patent Classification (CPC):
**B60Q 1/04; B60Q 1/14; F21S 41/143; F21S 41/153;
F21S 41/663; F21V 23/00;** F21W 2102/155;
F21Y 2115/10

(86) International application number:
**PCT/JP2023/042180**

(87) International publication number:
**WO 2024/117037 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.11.2022 JP 2022190138
28.06.2023 JP 2023106027

(71) Applicant: Koito Manufacturing Co., Ltd.
Tokyo 141-0001 (JP)

(72) Inventors:
• OHNO, Tomoyuki
  Shizuoka-shi, Shizuoka 424-8764 (JP)
• DAICHO, Yosuke
  Shizuoka-shi, Shizuoka 424-8764 (JP)
• SYAZWANI, Agus
  Shizuoka-shi, Shizuoka 424-8764 (JP)

(74) Representative: **Grünecker Patent- und
Rechtsanwälte
PartG mbB
Leopoldstraße 4
80802 München (DE)**

(54) **CONTROL DEVICE FOR VEHICLE LAMP, COMPUTER PROGRAM, AND VEHICLE LAMP**

(57) A headlamp (4) comprises a plurality of light sources (451), a sensor (452) that acquires the temperature of the plurality of light sources (451), a light source control unit (453), and an ADB control unit (47). The ADB control unit (47) comprises: an image generation unit (471) that outputs an image in which the respective lighting luminances of the plurality of light sources (451) are expressed as brightnesses of pixels corresponding to the respective light sources (451); and a storage unit (472) that stores a first image (I1) indicating a first luminance distribution of the lighting luminances, and a second image (I2) indicating a second luminance distribution (D2) of the lighting luminances. The light source control unit (453) individually controls the lighting luminances of the plurality of light sources (451) on the basis of the image output from the image generation unit (471). The image generation unit (471) generates a composite image (Ic) based on the first image (I1) and the second image (I2) in accordance with the measured temperature when the measured temperature is higher than a first threshold value (TH1), and starts derating control to output the composite image (Ic) to the light source control unit (453).

FIG. 1

## Description

TECHNICAL FIELD

The present disclosure relates to a control device for a vehicle lamp, a computer program, and a vehicle lamp.

BACKGROUND ART

As a vehicle lamp, a lamp including a semiconductor light source such as a light emitting diode (LED) or a laser diode is known. These kinds of semiconductor light sources have a function of preventing a further temperature rise by reducing a driving current amount supplied to the semiconductor light source such that a temperature of the semiconductor light source does not exceed a rated temperature, that is, a so-called derating function.

Further, a vehicle lamp that emits an adaptive driving beam (ADB) light distribution pattern is also known. The ADB light distribution pattern is a light distribution pattern in which a region where an object such as a preceding vehicle or an oncoming vehicle is present is not irradiated with light in a high-beam light distribution pattern. Glare to the object can be reduced by changing a non-irradiation region of the ADB light distribution pattern in accordance with the presence or absence and the position of the object.

Patent Literature 1 discloses a vehicle lamp system having a derating function and configured to emit an ADB light distribution pattern. The vehicle lamp system of Patent Literature 1 includes a semiconductor light source, a control unit that generates a light distribution command indicating a light distribution pattern, and a drive circuit capable of performing derating control for reducing a driving current amount supplied to the semiconductor light source in accordance with a state of the semiconductor light source based on the light distribution command.

CITATION LIST

PATENT LITERATURE

Patent Literature 1: JP2016-185717A

SUMMARY OF INVENTION

TECHNICAL PROBLEM

A high-definition ADB that controls a light distribution pattern with higher definition has been proposed. The high-definition ADB includes, for example, a large number of light sources arranged in a matrix. When the derating control is performed, it is complicated to calculate and set a driving current amount to be set for each light source of the large number of light sources, and a calculation load of the device is large. It is also conceivable to calculate a distribution of the driving current amount in accordance with the temperatures of the light sources and store the distribution in a storage unit in advance, but when the driving current distribution for each temperature is stored in the storage unit, a large-capacity storage unit is required.

Therefore, an object of the present disclosure is to provide a control device for a vehicle lamp including a large number of light sources, a computer program, and a vehicle lamp capable of performing derating control with a small storage capacity.

SOLUTION TO PROBLEM

A control device according to the present disclosure is a control device for a vehicle lamp,

the vehicle lamp including

a plurality of light sources arranged in a matrix;
a temperature acquisition unit configured to acquire a temperature of at least part of the plurality of light sources;
a control unit configured to individually control lighting luminance of the plurality of light sources; and
the control device,

the control device including:

an image generation unit configured to output an image in which the lighting luminance of each of the plurality of light sources arranged in the matrix is expressed as brightness of a pixel corresponding to each of the light sources; and
a storage unit configured to store a first image indicating a first luminance distribution of the lighting luminance, and a second image having average luminance lower than average luminance of the first image and indicating a second luminance distribution of the lighting luminance, in which

the control unit is configured to individually control the lighting luminance of the plurality of light sources based on the image output from the image generation unit; and
the image generation unit is configured to:

output the first image to the control unit when the temperature acquired by the temperature acquisition unit is equal to or lower than a first threshold, and
start derating control when the temperature acquired by the temperature acquisition unit is higher than the first threshold, the derating control including generating a composite image based on the first image and the second image in accordance with the temperature and outputting the composite image to the control unit.

A computer program according to the present disclosure is a computer program executable by a control device mounted on a vehicle lamp,

the vehicle lamp including:

a plurality of light sources arranged in a matrix;
a temperature acquisition unit configured to acquire a temperature of at least part of the plurality of light sources;
a control unit configured to individually control lighting luminance of the plurality of light sources; and
the control device,

the computer program, when executed, causing the control device to:

output an image in which the lighting luminance of each of the plurality of light sources arranged in the matrix is expressed as brightness of a pixel corresponding to each of the light sources;
individually control the lighting luminance of the plurality of light sources based on the output image;
store a first image indicating a first luminance distribution of the lighting luminance, and a second image having average luminance lower than average luminance of the first image and indicating a second luminance distribution of the lighting luminance;
output the first image to the control unit when the temperature acquired by the temperature acquisition unit is equal to or lower than a first threshold; and
start derating control when the temperature acquired by the temperature acquisition unit is higher than the first threshold, the derating control including generating a composite image based on the first image and the second image in accordance with the temperature and outputting the composite image to the control unit.

A vehicle lamp according to the present disclosure includes:

a plurality of light sources arranged in a matrix;
a temperature acquisition unit configured to acquire a temperature of at least part of the plurality of light sources;
an image generation unit configured to output an image in which the lighting luminance of each of the plurality of light sources arranged in the matrix is expressed as brightness of a pixel corresponding to each of the light sources;
a control unit configured to individually control the lighting luminance of the plurality of light sources based on the image output from the image generation unit; and
a storage unit configured to store a first image indicating a first luminance distribution of the lighting luminance, and a second image having average luminance lower than average luminance of the first image and indicating a second luminance distribution of the lighting luminance, in which
the image generation unit is configured to:

output the first image to the control unit when the temperature acquired by the temperature acquisition unit is equal to or lower than a first threshold; and
start derating control when the temperature acquired by the temperature acquisition unit is higher than the first threshold, the derating control including generating a composite image based on the first image and the second image in accordance with the temperature and outputting the composite image to the control unit.

ADVANTAGEOUS EFFECTS OF INVENTION

According to the present disclosure, it is possible to provide the control device for a vehicle lamp including the large number of light sources, the computer program, and the vehicle lamp capable of performing the derating control with a small storage capacity.

BRIEF DESCRIPTION OF DRAWINGS

[FIG. 1] FIG. 1 is a block diagram of a vehicle system in a vehicle including a vehicle lamp according to the present disclosure.
[FIG. 2] FIG. 2 is a schematic diagram illustrating a configuration of a high-beam lamp provided in FIG. 1.
[FIG. 3] FIG. 3 is a schematic diagram illustrating anADB light distribution pattern of a reference example.
[FIG. 4] FIG. 4 is a schematic diagram illustrating a high-definition ADB light distribution pattern of the present disclosure.
[FIG. 5] FIG. 5 is a schematic diagram illustrating a first image of the present disclosure.
[FIG. 6] FIG. 6 is a schematic diagram illustrating a second image of the present disclosure.
[FIG. 7] FIG. 7 is a schematic diagram illustrating a composite image of the present disclosure.
[FIG. 8] FIG. 8 is a flowchart illustrating a derating function of the present disclosure.
[FIG. 9] FIG. 9 is a graph illustrating a relationship between average luminance and a temperature of a plurality of light sources provided in the vehicle lamp of FIG. 1.
[FIG. 10] FIG. 10 is a block diagram of a first modification of the vehicle system.
[FIG. 11] FIG. 11 is a flowchart illustrating derating control according to a second modification.
[FIG. 12] FIG. 12 is a graph illustrating a temporal change in a temperature of a plurality of light sources and a temporal change in a driving current amount as derating control according to the second modification.

DESCRIPTION OF EMBODIMENTS

Hereinafter, an embodiment of the present disclosure (hereinafter, referred to as the present embodiment) will be described with reference to the drawings. Dimensions of members illustrated in the drawings may be different from actual dimensions of the members for convenience of description.

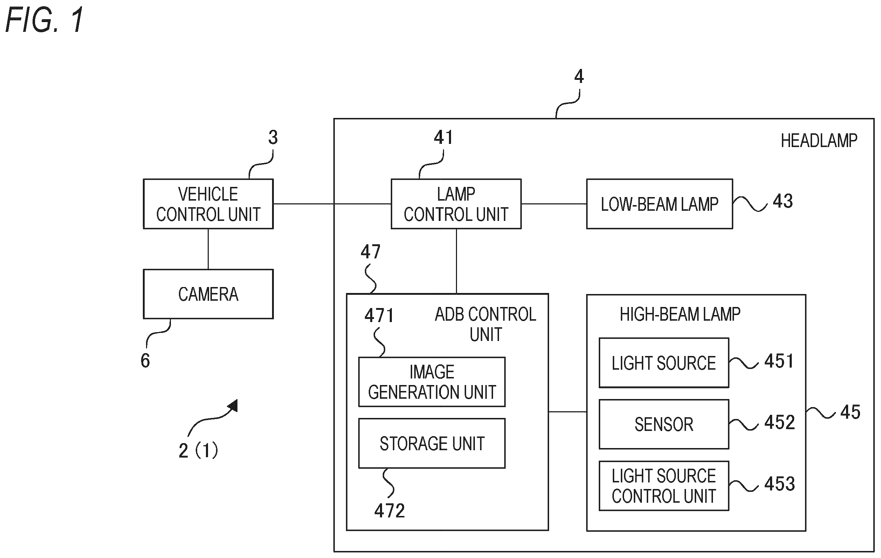

A vehicle system 2 in a vehicle 1 including headlamps 4 according to the present embodiment will be described below with reference to FIG. 1. FIG. 1 is a block diagram of the vehicle system 2.

As illustrated in FIG. 1, the vehicle system 2 includes a vehicle control unit 3, the headlamps 4, and a camera 6.

The vehicle control unit 3 controls travelling of the vehicle 1. The vehicle control unit 3 is implemented by, for example, at least one electronic control unit (ECU). The electronic control unit includes a computer system (for example, system on a chip (SoC)) including one or more processors and one or more memories, and an electronic circuit including an active element such as a transistor and a passive element. The processor includes, for example, at least one of a central processing unit (CPU), a micro processing unit (MPU), a graphics processing unit (GPU), and a tensor processing unit (TPU). The CPU may include a plurality of CPU cores. The GPU may include a plurality of GPU cores. The memory includes a read only memory (ROM) and a random access memory (RAM). The ROM may store a vehicle control program. For example, the vehicle control program may include an artificial intelligence (AI) program for autonomous driving. The AI program is a program (trained model) constructed by supervised or unsupervised machine learning (in particular, deep learning) using a multilayer neural network. The RAM may temporarily store the vehicle control program, vehicle control data, and/or surrounding environment information indicating a surrounding environment of the vehicle. The processor may be configured to load, onto the RAM, a program designated from various vehicle control programs stored in the ROM, and execute various kinds of processing in cooperation with the RAM. The computer system may be implemented by a non-von Neumann computer such as an application specific integrated circuit (ASIC) or a field-programmable gate array (FPGA). Further, the computer system may be implemented by a combination of a von Neumann computer and a non-von Neumann computer.

The camera 6 is, for example, a camera including an imaging element such as a charge-coupled device (CCD) or a complementary MOS (CMOS). The camera 6 acquires image data indicating the surrounding environment of the vehicle 1 and then outputs the image data to the vehicle control unit 3. The vehicle control unit 3 acquires the surrounding environment information based on the transmitted image data. Here, the surrounding environment information may include information on an object (another vehicle including a preceding vehicle or an oncoming vehicle, a pedestrian, a sign, or the like) present outside the vehicle 1. For example, the camera 6 detects the preceding vehicle traveling in front of the vehicle 1 and outputs image data indicating the preceding vehicle to the vehicle control unit 3. The vehicle control unit 3 acquires the surrounding environment information including the information on the preceding vehicle and information on a distance of the preceding vehicle with respect to the vehicle 1 and a position thereof based on the transmitted image data. The camera 6 may be formed as a monocular camera or a stereo camera.

The headlamps 4 are disposed on left and right sides of a front surface of the vehicle 1, respectively. The headlamp 4 includes a lamp control unit 41, a low-beam lamp 43, a high-beam lamp 45, and an ADB control unit 47. The headlamp 4 is an example of a vehicle lamp. The ADB control unit 47 is an example of a control device mounted on the vehicle lamp.

The lamp control unit 41 is configured to control the operation of the headlamp 4. In the present embodiment, the lamp control unit 41 is configured to control the low-beam lamp 43 and the high-beam lamp 45 via the ADB control unit 47. The lamp control unit 41 is implemented by, for example, an electronic control unit (ECU). The electronic control unit includes a computer system (for example, SoC) including one or more processors and one or more memories, and an electronic circuit including an active element such as a transistor and a passive element. The processor includes at least one of a CPU, an MPU, a GPU, and a TPU. The memory includes a ROM and a RAM. The computer system may also be configured using a non-von Neumann type computer such as an ASIC or an FPGA.

In the present embodiment, the vehicle control unit 3 and the lamp control unit 41 are provided as separate components, and the vehicle control unit 3 and the lamp control unit 41 may be integrally formed. In this respect, the vehicle control unit 3 and the lamp control unit 41 may be implemented by a single electronic control unit. A light source control unit 453 of the high-beam lamp 45 to be described later or an image generation unit 471 of the ADB control unit 47 may be formed as a portion of the lamp control unit 41.

The high-beam lamp 45 is configured to emit a high-beam light distribution pattern HP in front of the vehicle 1. The low-beam lamp 43 is configured to emit a low-beam light distribution pattern LP in front of the vehicle 1. The high-beam lamp 45 and the low-beam lamp 43 may be integrally provided in one housing or may be provided in separate housings.

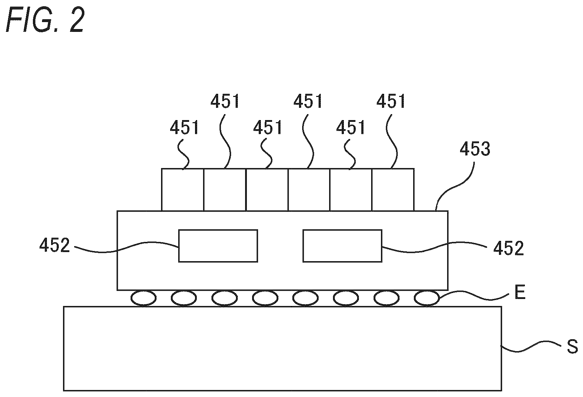

The high-beam lamp 45 is further configured to form a high-definition adaptive driving beam (ADB) light distribution pattern as a specific light distribution pattern. The ADB light distribution pattern is a light distribution pattern in which a region where the preceding vehicle or the oncoming vehicle is present is not irradiated with light in the high-beam light distribution pattern, and is a light distribution pattern in which a non-irradiation region is changed depending on the presence or absence and the position of the preceding vehicle or the oncoming vehicle. The ADB light distribution pattern has an effect of not giving glare to an occupant in the preceding vehicle or the oncoming vehicle. The high-beam lamp 45 includes a plurality of light sources 451, at least one sensor 452, and a light source control unit 453. The configuration of the high-beam lamp 45 will be described with reference to FIG. 2. FIG. 2 is a schematic diagram illustrating a configuration of the high-beam lamp 45.

As illustrated in FIG. 2, the plurality of light sources 451 are supported by the light source control unit 453. The plurality of light sources 451 are arranged in a matrix. In other words, the plurality of light sources 451 are two-dimensionally arranged not only in one direction but also in another direction perpendicular to the one direction. In the present embodiment, each of the plurality of light sources 451 is, for example, a micro LED.

The at least one sensor 452 is configured to acquire a temperature of at least part of the plurality of light sources 451. In the present embodiment, the high-beam lamp 45 includes a plurality of sensors 452. Each sensor 452 is configured to output a temperature of at least one corresponding light source 451. Each sensor 452 includes, for example, a semiconductor temperature sensor (Si diode). The plurality of sensors 452 are incorporated in the light source control unit 453. As described above, since the plurality of sensors 452 of the present embodiment are incorporated in the light source control unit 453 that supports the plurality of light sources 451, the temperatures of the plurality of light sources 451 can be monitored more accurately. The sensor 452 is an example of a temperature acquisition unit.

At least one sensor 452 may output the temperatures of, for example, a plurality of light sources 451 positioned around the center among the plurality of light sources 451 arranged in the matrix. Accordingly, it is easy to grasp the temperature of the light source 451 positioned at the center where the temperature is particularly likely to be high among the plurality of light sources 451 arranged in the matrix.

Alternatively, the plurality of light sources 451 arranged in the matrix may be divided into a plurality of segments, and one sensor 452 may be provided in each segment. One sensor 452 outputs the temperature of one corresponding segment. In this case, the average temperature of each segment may be input to the light source control unit 453.

The plurality of sensors 452 are not limited to sensors that directly measure the temperatures of the plurality of light sources 451, respectively. The plurality of sensors 452 are not limited to those incorporated in the light source control unit 453. The plurality of sensors 452 are separate from the light source control unit 453, and may measure the temperatures of the plurality of light sources 451 via another configuration. For example, at least one sensor 452 may measure the temperature of a substrate on which the plurality of light sources 451 are provided. Alternatively, the at least one sensor 452 may measure the temperature of a heat sink in which the plurality of light sources 451 are provided.

The light source control unit 453 is configured to individually control lighting luminance of the plurality of light sources 451. More specifically, the light source control unit 453 individually controls a driving current amount supplied from a current source (not illustrated) to each light source 451. Accordingly, each light source 451 is turned on with luminance corresponding to the supplied driving current amount. As a method of controlling the driving current amount, so-called DC dimming (analog dimming) in which a value of a constant current supplied to each light source 451 is changed or so-called PWM dimming in which dimming is performed by modulating a pulse width may be used. In the present embodiment, lighting includes not only a case where each light source 451 is turned on so as to be switched from a lighting-off state to a lighting-on state in which each light source 451 is turned on at predetermined luminance, but also a case where each light source 451 is turned on while adjusting brightness. The light source control unit 453 is implemented by, for example, an electronic control unit (ECU). The light source control unit 453 is supported by a substrate S via an electrode E. The light source control unit 453 is an example of a control unit.

The light source control unit 453 further has a function, that is, a so-called derating function of preventing a further temperature rise by reducing the driving current amount supplied to the plurality of light sources 451 such that the temperatures of the plurality of light sources 451 do not exceed a rated temperature. In the present embodiment, the light source control unit 453 exerts the derating function by individually controlling the lighting luminance of the plurality of light sources 451 based on an image output from the image generation unit 471 to be described later. Details of the derating function will be described later.

Referring back to FIG. 1, the description of the vehicle system 2 will be continued. The ADB control unit 47 includes the image generation unit 471 and a storage unit 472. The storage unit 472 is configured to store an image in which the lighting luminance of each of the plurality of light sources 451 arranged in the matrix is expressed as brightness of the pixel corresponding to each light source 451. The positions of the light sources 451 arranged in the matrix correspond to the positions of the pixels indicating the luminance of the light sources 451. That is, a brightness pattern of the image stored in the storage unit 472 matches a brightness pattern (or light distribution pattern) of the light source 451. Further, the storage unit 472 stores two types of such images. Specifically, the storage unit 472 is configured to store a first image I1 indicating a first luminance distribution D1 of lighting luminance and a second image I2 indicating a second luminance distribution D2 of the lighting luminance. Average luminance of the second image I2 is lower than average luminance of the first image I1. Details of the first image I1 and the second image I2 will be described later.

The image generation unit 471 is configured to output an image in which the lighting luminance of each of the plurality of light sources 451 is expressed as the brightness of the pixel corresponding to each light source 451. The image generation unit 471 is configured to generate a composite image Ic based on the first image I1 and the second image I2 in accordance with the temperatures of the plurality of light sources 451. The image generation unit 471 outputs the generated composite image Ic to the light source control unit 453 in accordance with the temperatures of the plurality of light sources 451. The image generation unit 471 is implemented by, for example, an electronic control unit (ECU). Details of the operation of the image generation unit 471 will be described later.

[High-Definition ADB]

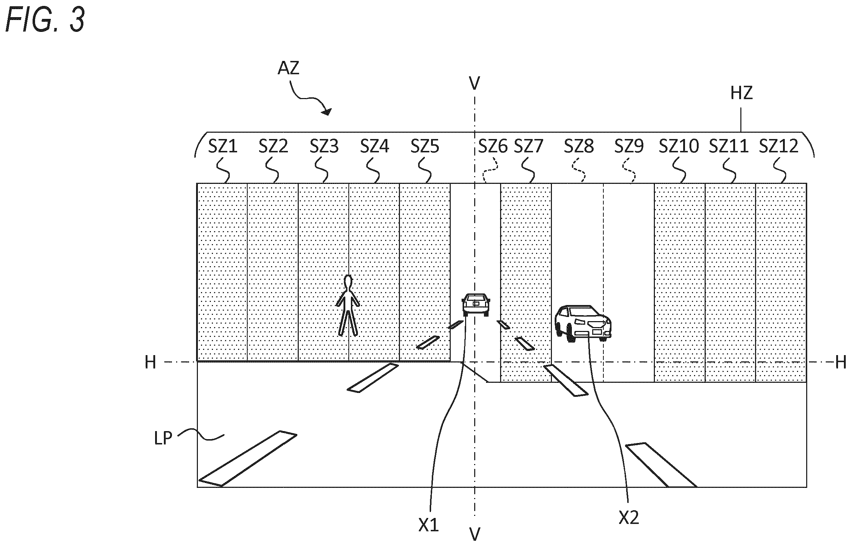

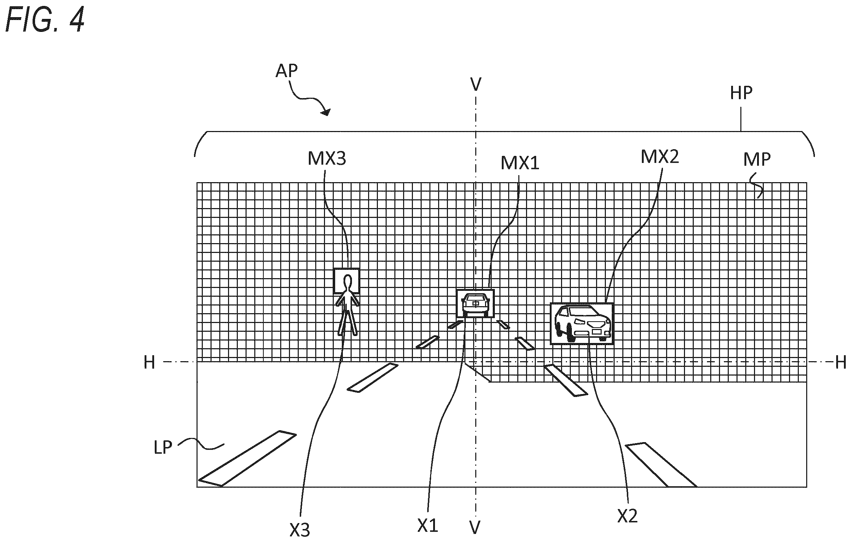

Next, the high-definition ADB light distribution pattern according to the present embodiment will be described below with reference to FIGS. 3 and 4.

FIG. 3 is a schematic diagram illustrating the ADB light distribution pattern of a reference example. FIG. 4 is a schematic diagram illustrating a high-definition ADB light distribution pattern according to the present embodiment. FIGS. 3 and 4 illustrate a V-V line indicating a vertical direction (an upper-lower direction in FIG. 3 or 4) at the center of the irradiation range of the ADB light distribution pattern, and an H-H line orthogonal to the line V-V and extending in a horizontal direction (a left-right direction in FIG. 3 or 4). FIGS. 3 and 4 both illustrate the low-beam light distribution pattern LP, but since both of the low-beam light distribution patterns LP are the same, the description of the low-beam light distribution pattern LP is omitted.

As illustrated in FIG. 3, in an ADB light distribution pattern AZ of the reference example, a high-beam light distribution pattern HZ is divided into a plurality of sub-light distribution patterns SZ. The plurality of sub-light distribution patterns SZ are arranged in one direction. In the ADB light distribution pattern, for example, a plurality of light sources arranged in a row are provided, and one sub-light distribution pattern SZ corresponding to one light source is irradiated or not irradiated with light by turning on or turning off the light source.

In the example illustrated in FIG. 3, the number of sub-light distribution patterns SZ is, for example, twelve, and these sub-light distribution patterns SZ are arranged in parallel in the horizontal direction. In FIG. 3, the sub-light distribution patterns SZ1 to SZ12 are arranged in parallel from the left in the horizontal direction.

For example, when a preceding vehicle X1 is present in front of the vehicle, the light source corresponding to the sub-light distribution pattern SZ6 is turned off such that the sub-light distribution pattern SZ6 corresponding to the position of the preceding vehicle X1 is not irradiated with light. For example, when an oncoming vehicle X2 is present in front of the vehicle, the light sources corresponding to the sub-light distribution patterns SZ8 and SZ9 are turned off such that the sub-light distribution patterns SZ8 and SZ9 corresponding to the position of the oncoming vehicle X2 are not irradiated with light. With such a configuration, it is possible to reduce glare to an occupant in the preceding vehicle X1 or the oncoming vehicle X2.

In the ADB light distribution pattern AZ of the reference example, the high-beam light distribution pattern HZ is divided into a plurality of sub-light distribution patterns in the horizontal direction, but is not divided in the vertical direction. That is, one sub-light distribution pattern SZ occupies a relatively wide range in the vertical direction. Therefore, for example, when the preceding vehicle X1 is present in the sub-light distribution pattern SZ6, light cannot be emitted between the vehicle 1 and the preceding vehicle X1 or in front of the preceding vehicle X1.

On the other hand, as illustrated in FIG. 4, in a high-definition ADB light distribution pattern AP, the high-beam light distribution pattern HP is divided into a large number of fine light distribution patterns MP. By turning on or turning off one light source 451, one fine light distribution pattern MP corresponding to the one light source is irradiated or not irradiated with light. In particular, in the present embodiment, the plurality of light sources 451 of the high-beam lamp 45 are arranged in the matrix. Accordingly, the fine light distribution patterns MP are also arranged in the matrix.

In the present embodiment, 256 fine light distribution patterns MP are arranged in the horizontal direction and 64 fine light distribution patterns MP are arranged in the vertical direction. In the high-definition ADB light distribution pattern, the high-beam light distribution pattern HP is divided into the plurality of fine light distribution patterns MP not only in the horizontal direction but also in the vertical direction. That is, a range occupied by one fine light distribution pattern MP is smaller than the range occupied by one sub-light distribution pattern SZ. Therefore, for example, when the preceding vehicle X1 is present in front of the vehicle, only a range MX1 of the fine light distribution pattern MP corresponding to the position of the preceding vehicle X1 is not irradiated with the light, and the light can be irradiated between a subject vehicle and the preceding vehicle X1 or further in front of the preceding vehicle X1. Similarly, when the oncoming vehicle X2 or a pedestrian X3 is present in front of the vehicle, only the range MX2 of the fine light distribution pattern MP corresponding to the position of the oncoming vehicle X2 or the range MX3 of the fine light distribution pattern MP corresponding to the face or the upper body of the pedestrian X3 is not irradiated with light, and other regions can be irradiated with light.

In the present embodiment, the high definition means that the fine light distribution patterns MP are arranged not only in the horizontal direction but also in the vertical direction, and 100 or more fine light distribution patterns MP are arranged in the horizontal direction.

In order to implement a high-definition ADB light distribution pattern as in the present embodiment, the light source control unit 453 needs to individually turn on or turn off the plurality of light sources 451 arranged in the matrix. Further, in order to perform derating control on the plurality of light sources 451 that form the high-definition ADB light distribution pattern, it is necessary to adjust the lighting luminance of each light source 451, and the light source control unit 453 may have a corresponding processing load. Therefore, in the present embodiment, the processing load of the light source control unit 453 is reduced by using an image in which the lighting luminance of each of the plurality of light sources 451 is expressed as the brightness of the pixel corresponding to each light source 451. Hereinafter, various images used in the present embodiment will be described.

[First Image, Second Image, and Composite Image]

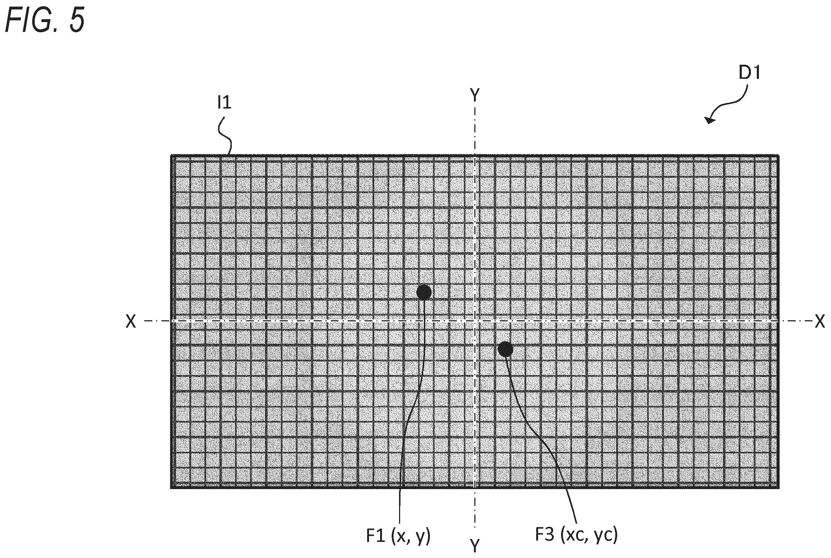

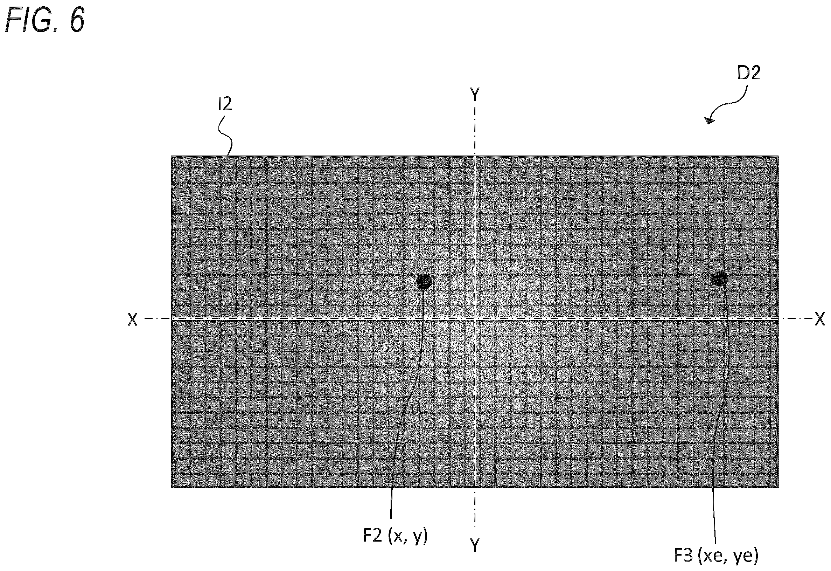

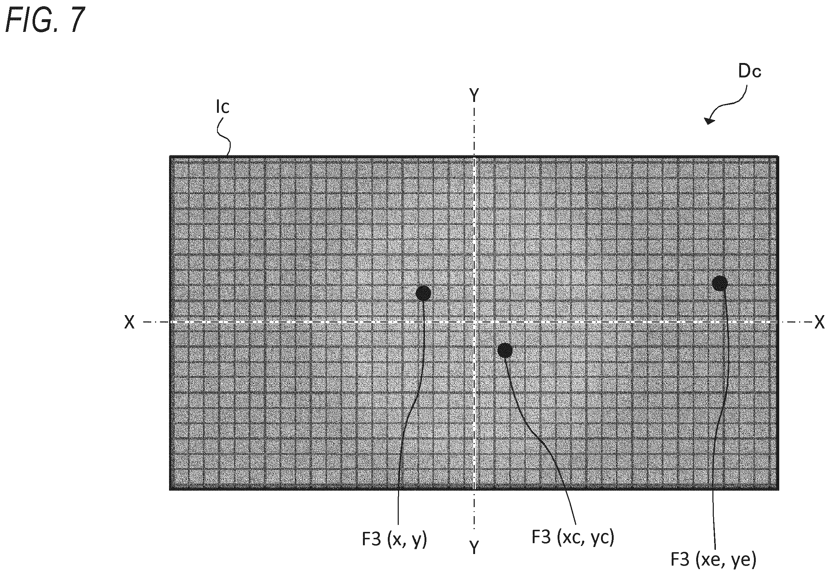

An image in which the lighting luminance of each of the plurality of light sources 451 arranged in the matrix is expressed as the brightness of the pixel corresponding to each light source 451 will be described with reference to FIGS. 5 to 7. FIG. 5 is a schematic diagram illustrating the first image I1. FIG. 6 is a schematic diagram illustrating the second image I2. FIG. 7 is a schematic diagram illustrating the composite image Ic. In FIGS. 5 to 7, the image is represented by an x axis and a y axis as two-dimensional coordinate axes, and brightness of a pixel at a coordinate position of each pixel is represented by F(x, y).

The first image I1 illustrated in FIG. 5 is an image representing a case where the lighting luminance of the plurality of light sources 451 has the first luminance distribution D1. The first luminance distribution D1 is the brightest luminance distribution in which the plurality of light sources 451 can be turned on as a whole. Average luminance of the first luminance distribution D1 indicated by the first image I1 is first average luminance L1. The first image I1 is an image used before the light source control unit 453 activates the derating function (before the start of the derating control). Further, the first image I1 is an image used to generate the composite image Ic while the light source control unit 453 activates the derating function (during the derating control).

The second image I2 illustrated in FIG. 6 is an image representing a case where the lighting luminance of the plurality of light sources 451 has the second luminance distribution D2. The second luminance distribution D2 is an image used when the derating function is most strongly activated. That is, the second luminance distribution D2 is an image used when the plurality of light sources 451 are driven such that a heat generation amount from the plurality of light sources 451 is minimized while maintaining the required light distribution pattern. Therefore, second average luminance L2, which is average luminance of the second luminance distribution D2 indicated by the second image I2, is lower than the first average luminance L1 of the first image I1. In other words, the plurality of light sources 451 in the case of the second image I2 are turned on to be entirely darker than in the case of the first image I1. The second image I2 is an image used to generate the composite image Ic while the light source control unit 453 activates the derating function (during the derating control).

The composite image Ic illustrated in FIG. 7 is an image generated by combining the first image I1 with the second image I2 in accordance with the temperatures of the plurality of light sources 451. The composite image Ic is an image that instructs the lighting luminance of the plurality of light sources 451 to have a composite luminance distribution Dc. Composite average luminance Lc, which is average luminance of the composite luminance distribution Dc indicated by the composite image Ic, is higher than the second average luminance L2 of the second image I2 and lower than the first average luminance L 1 of the first image I1. In other words, the plurality of light sources 451 in the case of the composite image Ic are turned on to be entirely darker than in the case of the first image I1 and to be entirely brighter as compared with the case of the second image I2. The composite image Ic is an image generated while the light source control unit 453 activates the derating function (during the derating control).

[Derating Control]

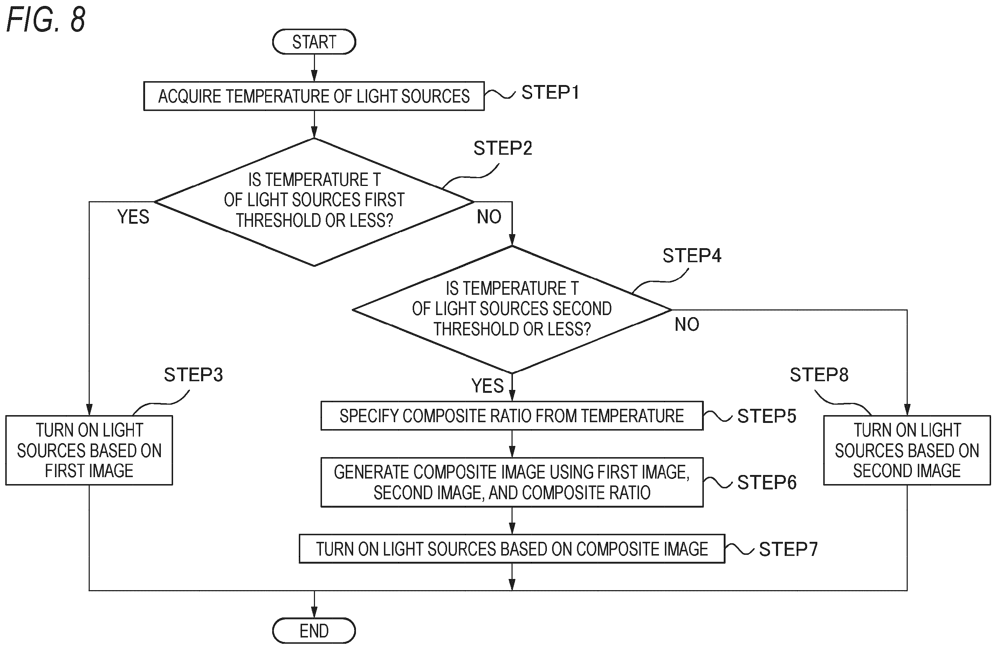

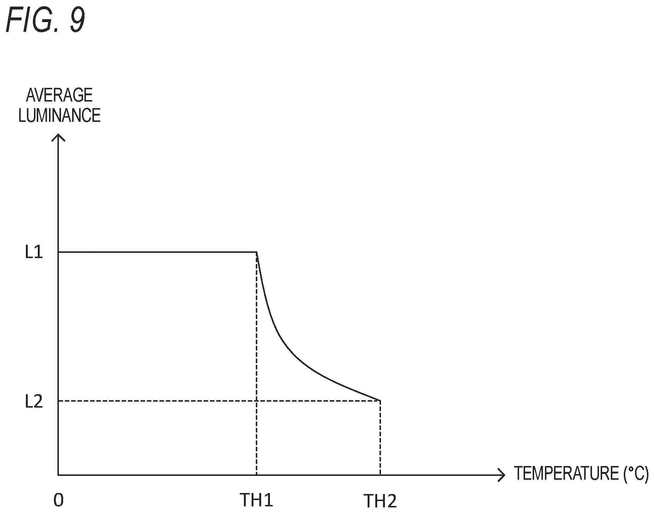

Next, the derating control of the present embodiment will be described with reference to FIGS. 8 and 9. FIG. 8 is a flowchart illustrating the derating control according to the present embodiment. FIG. 9 is a graph illustrating a relationship between the average luminance and the temperature of the plurality of light sources 451. The light source control unit 453 periodically executes the flowchart illustrated in FIG. 8.

As illustrated in FIG. 8, the light source control unit 453 acquires a temperature T of the plurality of light sources 451 from the sensors 452 (STEP 1). Next, the light source control unit 453 determines whether the acquired temperature T of the plurality of light sources 451 is equal to or lower than the first threshold TH1 (STEP 2).

When the temperature T is equal to or lower than the first threshold TH1 (YES in STEP 2), it is unnecessary to reduce the heat generation amount of the plurality of light sources 451. In this case, the light source control unit 453 calls the first image I1 from the storage unit 472 and operates the plurality of light sources 451 with the first luminance distribution D1 indicated by the first image I1 (STEP 3). Thereafter, the light source control unit 453 ends the processing.

When the temperature T is higher than the first threshold TH1 (NO in STEP 2), it is necessary to reduce the heat generation amount of the plurality of light sources 451, and the derating control is started. Thereafter, the light source control unit 453 determines whether the temperature T is equal to or lower than the second threshold TH2 (STEP 4).

When the temperature T is equal to or lower than the second threshold TH2 (YES in STEP 4), the image generation unit 471 specifies a composite ratio in accordance with the temperature T (STEP 5). Further, the image generation unit 471 calls the first image I1 and the second image I2 from the storage unit 472, and generates the composite image Ic using the first image I1, the second image I2, and the composite ratio (STEP 6).

In STEP 6, the image generation unit 471 can generate the composite image Ic using, for example, the following Equation (1). In Equation (1), luminance of a pixel positioned at (x, y) of the first image I1 is defined as $F1(x, y)$ (FIG. 5). Luminance of a pixel positioned at (x, y) of the second image I2 is defined as $F2(x, y)$ (FIG. 6). Luminance of a pixel positioned at (x, y) of the composite image Ic is defined as $F3(x, y)$ (FIG. 7). A composite coefficient $\alpha$ is a degree (first degree of influence) at which the luminance $F1(x, y)$ of the first image I1 can influence the luminance $F3(x, y)$ of the composite image Ic, and $0 < \alpha < 1$. A composite coefficient $\beta$ is a degree (second degree of influence) at which the luminance $F2(x, y)$ of the second image I2 can influence the luminance $F3(x, y)$ of the composite image Ic, and $0 < \beta < 1$.

$$F3(x, y) = \alpha * F1(x, y) + \beta * F2(x, y) \ldots (1)$$

In this example, the above-described composite ratio is $\alpha$ and $\beta$. In Equation (1), the composite coefficient $\alpha$ may be a function $\alpha(T)$ of the temperature of the plurality of light sources 451. The composite coefficients $\alpha$ and $\beta$ may be set to satisfy the relationship of $\alpha + \beta = 1$. For example, the image generation unit 471 changes $\alpha(T)$, which is the first degree of influence of the first image I1 in the composite image Ic, in accordance with the temperature of the plurality of light sources 451. Specifically, when the temperature of the plurality of light sources 451 is higher than the first threshold TH1, the image generation unit 471 increases $\alpha(T)$ as the

temperature is lower. Conversely, when the temperature of the plurality of light sources 451 is higher than the first threshold TH1, the image generation unit 471 increases $\{1 - \alpha(T)\}$ as the temperature is higher. In STEP 5, the image generation unit 471 specifies the first degree of influence $\alpha(T)$ as the composite ratio corresponding to the temperature T.

However, $\alpha$ and $\beta$ may be constants that do not change with the temperature. STEP 5 simply performs processing of reading a constant.

Referring back to FIG. 8, the description of the flowchart will be continued.

As described above, the image generation unit 471 generates the composite image Ic. The light source control unit 453 operates the plurality of light sources 451 with the composite luminance distribution Dc indicated by the generated composite image Ic (STEP 7). In other words, when the temperature T acquired by the sensor 452 is higher than the first threshold TH1 and equal to or lower than the second threshold TH2, the light source control unit 453 turns on the plurality of light sources 451 with the composite luminance distribution Dc indicated by the composite image Ic in accordance with the temperature. Thereafter, the light source control unit 453 ends the processing.

The composite average luminance Lc of the composite image Ic is lower than the first average luminance L1 of the first image I1. The heat generation amount of the plurality of light sources 451 when the plurality of light sources 451 are turned on based on the composite image Ic is reduced as compared with the heat generation amount when the plurality of light sources 451 are turned on based on the first image I1. Therefore, a further temperature rise of the plurality of light sources 451 is prevented.

On the other hand, when the temperature T of the plurality of light sources 451 is higher than the second threshold TH2 (NO in STEP 4), the light source control unit 453 calls the second image I2 from the storage unit 472 and operates the plurality of light sources 451 with the second luminance distribution D2 indicated by the second image I2 (STEP 8). In other words, when the temperature measured by the sensor 452 is higher than the second threshold TH2, the light source control unit 453 turns on the plurality of light sources 451 with the second luminance distribution D2 indicated by the second image I2. Thereafter, the light source control unit 453 ends the processing.

When the derating control is performed on the plurality of light sources 451 arranged in the matrix, it is complicated to calculate the driving current amount supplied to each of the light sources 451 and set a luminance distribution in accordance with the driving current amount, unlike the above-described embodiment. Such control may increase a processing load of the light source control unit 453 and the image generation unit 471. It is also possible to calculate in advance the distribution of the driving current amount or the luminance distribution in accordance with the temperature of the plurality of light sources 451 and store the distribution of the driving current amount or the luminance distribution in the storage unit 472. However, storing the distribution of the driving current amount or the luminance distribution for each temperature in the storage unit 472 compresses the capacity of the storage unit 472.

According to the present embodiment, luminance distributions at various temperatures can be set by a simple method of combining two images that are the first image I1 and the second image I2. The processing load can be significantly reduced as compared with the case of directly calculating the driving current amount or the luminance for each light source 451. Further, the storage unit 472 may store only two types of images, which are the first image I1 and the second image I2. Therefore, it is not necessary to prepare a storage unit having a large capacity.

[First Modification]

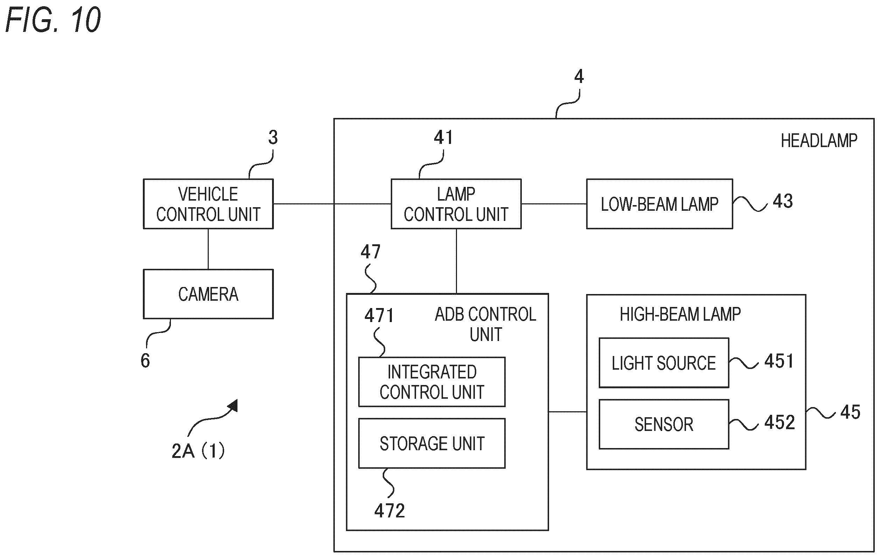

Next, a modification of the vehicle system 2 will be described below with reference to FIG. 10. FIG. 10 is a block diagram of a vehicle system 2A according to a first modification. In the configuration illustrated in FIG. 10, the same components as those illustrated in FIG. 1 are denoted by the same reference numerals, and the description thereof is omitted.

As illustrated in FIG. 10, the vehicle system 2A includes the vehicle control unit 3, the headlamps 4, and the camera 6.

In the embodiment illustrated in FIG. 1, the high-beam lamp 45 includes the light source control unit 453, and the ADB control unit 47 includes the image generation unit 471. On the other hand, in the first modification illustrated in FIG. 10, the ADB control unit 47 includes an integrated control unit 473 instead of the light source control unit 453 and the image generation unit 471. The integrated control unit 473 is a single electronic control unit in which the function of the light source control unit 453 and the function of the image generation unit 471 are integrated. The integrated control unit 473 is an example of a control unit. Since the derating control performed by the integrated control unit 473 is similar to the derating control (FIG. 8) performed by the light source control unit 453 and the image generation unit 471, the description thereof will be omitted.

As illustrated in FIG. 10, the headlamp 4 of the first modification includes the plurality of light sources 451 arranged in a matrix, the sensor 452 that acquires the temperature of at least part of the plurality of light sources 451, the integrated control unit 473 that individually controls lighting luminance of the plurality of light sources 451, and the storage unit 472 that stores an image in which the lighting luminance of each of the plurality of light sources 451 arranged in the matrix is expressed as the brightness of a pixel corresponding to each light source 451. The storage unit 472 stores the first image I1 indicating the first luminance distribution D1 of the lighting luminance and the second image I2 indicating the second luminance distribution D2 of the lighting luminance having the average luminance lower than the average luminance indicated by the first image I1. The integrated control unit 473 turns on the plurality of light sources 451 in the first luminance distribution D1 indicated by the first image I1 when the temperature T acquired by the sensor 452 is equal to or lower than the first threshold TH1. Further, when the temperature T acquired by the sensor 452 is higher than the first threshold TH1, the integrated control unit 473 generates the composite image Ic based on the first image I1 and the second image I2 in accordance with the temperature T, and turns on the plurality of light sources 451 with the luminance distribution indicated by the composite image Ic.

In the present modification, as in the above-described embodiment, the processing load of the integrated control unit 473 can be significantly reduced by combining the two images of the first image I1 and the second image I2. Further, since the storage unit 472 only needs to store two types of images, which are the first image I1 and the second image I2, a large capacity is not required.

[Second Modification]

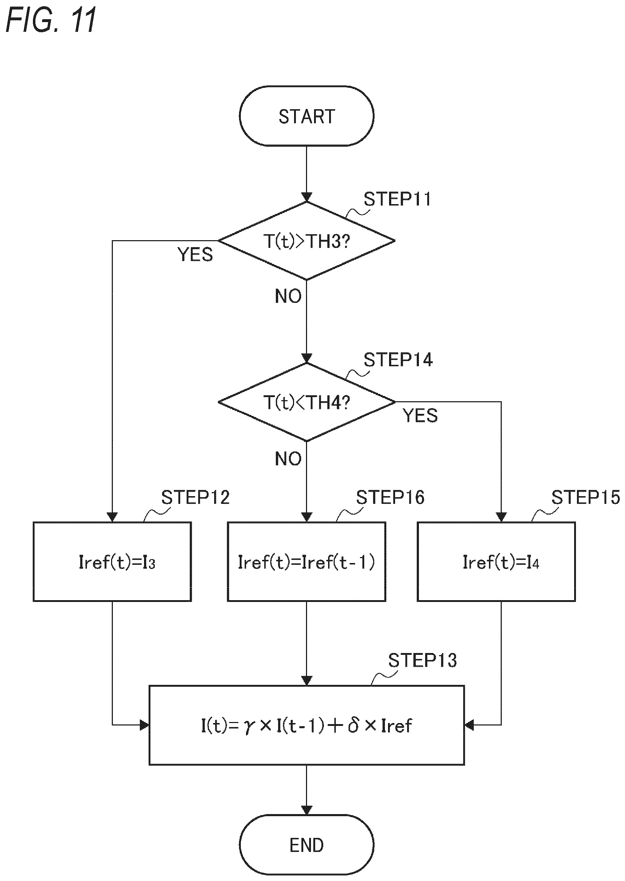

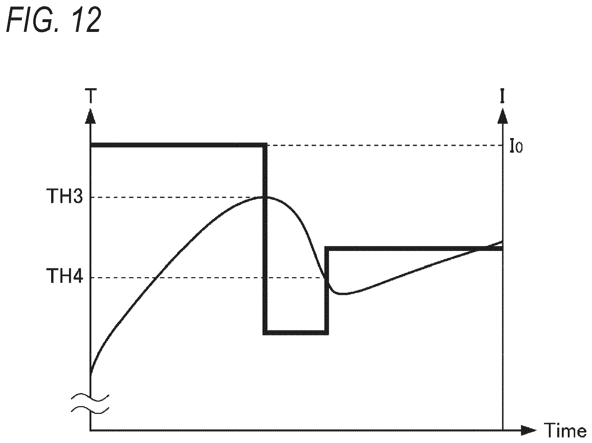

Next, a modification of the derating control will be described below with reference to FIGS. 11 and 12. FIG. 11 is a flowchart illustrating the derating control according to a second modification. FIG. 11 illustrates processing corresponding to STEP 4 to STEP 6 in the flowchart of FIG. 8. When the temperature T is higher than the first threshold TH1 (NO in STEP 2 of FIG. 8), the derating control is started, but the temperature T of the plurality of light sources 451 may not immediately decrease. In the following second modification, as an example, processing in a case where the temperature T rises slowly after the derating control is started will be described.

In the second modification, the storage unit 472 stores a third image I3 and a fourth image I4 set as reference images Iref to be described later. Other configurations according to the second modification are similar to the configurations illustrated in FIG. 1, and thus description thereof will be omitted.

As illustrated in FIG. 11, after starting the derating control, the light source control unit 453 determines whether the temperature T acquired by the sensor 452 is higher than a third threshold TH3 (STEP 11).

When the temperature T is higher than the third threshold TH3 (YES in STEP 11), in order to further reduce a heat generation amount of the plurality of light sources 451, the image generation unit 471 generates a composite image as follows such that the temperature T decreases. First, the image generation unit 471 calls the third image I3 from the storage unit 472 as the reference image Iref to be described later (STEP 12). The third image I3 is an image having average luminance lower than that of an immediately previously generated composite image I(t-1). The third image I3 is an image representing a case where the plurality of light sources 451 are turned on relatively darkly. The third image I3 may be the second image I2.

Thereafter, the image generation unit 471 generates a composite image I(t) generated at time t as a composite image of the immediately previously generated composite image I(t-1) and the third image I3 (STEP 13).

In STEP 13, the image generation unit 471 generates a composite image using, for example, the following Equation (2). In Equation (2), the composite image I(t) is defined as a function generated at time t. The reference image Iref is an image to be referred to when the composite image I(t) is generated. The image generation unit 471 generates the composite image I(t) generated at time t as a composite image of the immediately previously generated composite image I(t-1) and the reference image Iref. A composite coefficient $\gamma$ is a degree (third degree of influence) at which the immediately previously generated composite image I(t-1) can influence the composite image I(t), and $0 < \gamma < 1$. The composite coefficient $\delta$ is a degree (fourth degree of influence) at which the reference image Iref can influence the composite image I(t), and $0 < \delta < 1$.

$$I(t) = \gamma * I(t-1) + \delta * Iref \ ... \ (2)$$

The composite coefficients $\gamma$ and $\delta$ may be set to satisfy a relationship of $\gamma + \delta = 1$. For example, the image generation unit 471 changes $\gamma$, which is the third degree of influence of the reference image Iref in the composite image I(t), in accordance with the temperature of the plurality of light sources 451. Specifically, when the temperature of the plurality of light sources 451 is higher than the third threshold TH3, the image generation unit 471 increases $\gamma$ as the temperature is lower. Conversely, when the temperature of the plurality of light sources 451 is higher than the third threshold TH3, the image generation unit 471 increases $\{1 - \gamma\}$ as the temperature is higher. As described above, the image generation unit 471 specifies the third degree of influence $\gamma$ as a composite ratio in accordance with the temperature T.

Referring back to FIG. 11, the description of the flowchart will be continued.

As described above, the image generation unit 471 generates a composite image I(t) (STEP 13). The light source control unit 453 operates the plurality of light sources 451 with the composite luminance distribution indicated by the generated composite image I(t) (STEP 7 in FIG. 8). Thereafter, the light source control unit 453 ends the processing.

The composite average luminance of the composite image I(t) is lower than the average luminance of the immediately previously generated composite image I(t-1). The heat generation amount of the plurality of light sources 451 when the plurality of light sources 451 are turned on based on the composite image I(t) is smaller than the heat generation amount when the plurality of light sources 451 are turned on based on the immediately previously generated composite image I(t-1). Therefore, a further temperature rise of the plurality of light sources 451 is prevented.

On the other hand, when the temperature T of the plurality of light sources 451 is equal to or lower than the third threshold TH3 (NO in STEP 11), the light source control unit 453 determines whether the temperature T is lower than the fourth threshold TH4 (STEP 14). The fourth threshold TH4 is a threshold lower than the third threshold TH3.

When the temperature T is lower than the fourth threshold TH4 (YES in STEP 14), the heat generation amount of the plurality of light sources 451 is reduced more than necessary, the driving current amount supplied to the plurality of light sources 451 is too low, and the light distribution pattern is dark. Therefore, the image generation unit 471 increases the driving current amount supplied to the plurality of light sources 451 to brighten the light distribution pattern. That is, the image generation unit 471 generates the composite image I(t) brighter than the immediately previously generated composite image I(t-1). As a result, the image generation unit 471 generates the composite image such that the temperature T rises. Specifically, first, the image generation unit 471 calls the fourth image I4 from the storage unit 472 as the reference image Iref (STEP 15). The fourth image I4 is an image having average luminance higher than that of the immediately previously generated composite image I(t-1). The fourth image I4 is an image representing a case where the plurality of light sources 451 are turned on relatively brightly. The fourth image I4 may be the first image I1.

Thereafter, the image generation unit 471 generates a composite image I(t) generated at time t as a composite image of the immediately previously generated composite image I(t-1) and the fourth image I4 (STEP 13). The light source control unit 453 operates the plurality of light sources 451 with the composite luminance distribution indicated by the generated composite image I(t) (STEP 7 in FIG. 8). Thereafter, the light source control unit 453 ends the processing.

The composite average luminance of the composite image I(t) is higher than the average luminance of the immediately previously generated composite image I(t-1). The driving current amount for the plurality of light sources 451 when the plurality of light sources 451 are turned on based on the composite image I(t) increases as compared with the driving current amount when the plurality of light sources 451 are turned on based on the immediately previously generated composite image I(t-1). Therefore, the plurality of light sources 451 are turned on relatively brightly.

On the other hand, when the temperature T of the plurality of light sources 451 is equal to or higher than the fourth threshold TH4 and equal to or lower than the third threshold TH3 (NO in STEP 14), it is considered that a heat generation amount of the light source 451 and the heat dissipation amount to the outside are balanced, and thus, in the present modification, the immediately preceding driving current amount is maintained. Specifically, the image generation unit 471 sets the immediately previously generated composite image I(t-1) as the reference image Iref (STEP 16). Then, the image generation unit 471 generates the composite image I(t) such that the generated composite image I(t) becomes the immediately previously generated composite image I(t-1) (STEP 13). The light source control unit 453 operates the plurality of light sources 451 with the composite luminance distribution indicated by the generated composite image I(t) (STEP 7 in FIG. 8). Thereafter, the light source control unit 453 ends the processing.

The above-described processing is repeatedly executed at predetermined time intervals.

FIG. 12 is a graph illustrating a temporal change in the temperature T of the plurality of light sources 451 and a temporal change in the driving current amount after the derating control is started as the derating control according to the second modification. In FIG. 12, a horizontal axis represents time. A left vertical axis represents the temperature T acquired by the sensor 452, and a right vertical axis represents the driving current amount supplied to the plurality of light sources 451. The left vertical axis may be an average temperature of the temperatures acquired by the plurality of sensors 452. A solid line indicates the temporal change in the temperature T acquired by the sensor 452. A thick line indicates the temporal change in the driving current amount supplied to the light source 451.

As illustrated in FIG. 12, after the derating control is started, a driving current amount $I_0$ is supplied to the light source 451. The driving current amount $I_0$ is a driving current amount at the start of the derating control. The driving current amount $I_0$ supplied to the light source 451 is maintained until the temperature T becomes higher than the third threshold TH3. At this time, the temperature T gradually increases.

When the temperature T becomes higher than the third threshold TH3, in order to further reduce the heat generation amount of the plurality of light sources 451, the driving current amount supplied to the light source 451 becomes lower than the immediately preceding driving current amount. The higher the temperature T is than the third threshold TH3, the more the driving current amount supplied to the light source 451 decreases compared to the immediately preceding driving current amount.

When the temperature T becomes lower than the fourth threshold TH4, in order to prevent the light distribution pattern from becoming unnecessarily dark, the driving current amount supplied to the light source 451 becomes higher than the immediately preceding driving current amount. The lower the temperature T is than the fourth threshold TH4, the more the driving current amount supplied to the light source 451 increases compared to the immediately preceding driving current amount.

When the temperature T is equal to or higher than the fourth threshold TH4 and equal to or lower than the third threshold TH3, it is considered that the heat generation amount of the light source 451 and the heat dissipation amount to the outside are balanced, and thus the driving current amount supplied to the light source 451 is the same as the immediately preceding driving current amount. In other words, while the temperature T is equal to or higher than the fourth threshold TH4 and equal to or lower than the third threshold TH3, the driving current amount supplied to the light source 451 is constant.

As described above, in the present modification, when the temperature T acquired by the sensor 452 is higher than the third threshold TH3 after the derating control is started, the image generation unit 471 generates the composite image I(t) such that the temperature T decreases. The composite image I(t) generated at time t is a composite image of the immediately previously generated composite image I(t-1) and the third image I3 having the average luminance lower than that of the composite image I(t-1). Therefore, luminance distributions at various temperatures can be set by a simple method of combining two images. The processing load can be significantly reduced as compared with the case of directly calculating the driving current amount or the luminance for each light source 451. Further, the storage unit 472 may store only the third image I3 and the fourth image I4. Therefore, it is not necessary to prepare a storage unit having a large capacity.

The third image I3 may be the second image I2. In this case, the capacity of the storage unit 472 can be further reduced.

In the present modification, when the temperature T acquired by the sensor 452 is lower than the fourth threshold after the derating control is started, the image generation unit 471 generates the composite image I(t) such that a bright light distribution pattern is obtained. As a result, the image generation unit 471 generates the composite image I(t) such that the temperature T rises. The composite image I(t) generated at time t is a composite image of the immediately previously generated composite image I(t-1) and the fourth image I4 having the average luminance higher than that of the composite image I(t-1). Even in such a case, a similar effect as described above is exhibited.

The fourth image I4 may be the first image I1. In this case, the capacity of the storage unit 472 can be further reduced.

Although the embodiments and the modifications of the present disclosure have been described above, it is needless to say that the technical scope of the present disclosure should not be construed as being limited by the description of the embodiments and the modifications. The present embodiment and the modifications are merely examples, and it is understood by those skilled in the art that various modifications of the embodiment are possible within the scope of the invention described in the claims. The technical scope of the present disclosure should be determined based on the scope of the invention described in the claims and the equivalent scope thereof.

In the above-described embodiment and modifications, a central position (xc, yc) positioned in a central portion and a peripheral position (xe, ye) positioned in a peripheral portion of the high-definition ADB light distribution pattern AP are defined. At this time, a difference in brightness between a first pixel present at a central position (xc, yc) in the first image I1 and a first pixel present at the central position (xc, yc) in the composite image Ic may be smaller than a difference in brightness between a second pixel present at a peripheral position (xe, ye) in the first image I1 and a second pixel present at the peripheral position (xe, ye) in the composite image Ic (FIGS. 5 to 7).

In the high-definition ADB light distribution pattern, even if the derating control is performed, the central portion is a region to be gazed at by an occupant of the vehicle 1, and is preferably brightly illuminated. On the other hand, the peripheral portion of the high-definition ADB light distribution pattern may not necessarily be brightly illuminated as compared with the central portion. As described above, the derating function of the present disclosure may not uniformly change the entire image. That is, the derating function of the present disclosure can form a more appropriate light distribution pattern while preventing a further temperature rise of the plurality of light sources 451 by changing the degree of change in the brightness of the pixel in accordance with the position of the light distribution pattern.

In the second modification, the reference image Iref referred to when generating the composite image I(t) may be not only the first image and the second image but also an intermediate image between the first image and the second image under the condition that the third image I3 and the fourth image are different from each other.

The third threshold TH3 in the second modification may be the first threshold TH1. In other words, the first threshold TH1 as a start temperature of the derating control may match the third threshold TH3 as an upper limit threshold. The third threshold TH3 may be the second threshold TH2. In other words, the second threshold TH2 as an end temperature of the derating control may match the third threshold TH3 as an upper limit threshold.

Each function of the ADB control unit 47 and the light source control unit 453 or the integrated control unit 473 described above may be implemented by a general-purpose microprocessor that operates in cooperation with a general-purpose memory. Examples of the general-purpose microprocessor include a CPU, an MPU, and a GPU. Examples of the general-purpose memory include a ROM and a RAM. In this case, the ROM can store a computer program for executing the above-described processing. The ROM is an example of a non-transitory computer readable medium. The general-purpose microprocessor designates at least a part of the computer program stored in the ROM, loads the computer program on the RAM, and executes the above-described processing in cooperation with the RAM. The computer program may be pre-installed in the general-purpose memory, or may be downloaded from an external server device via a communication network and installed in the general-purpose memory. In this case, the external server device is an example of the non-transitory computer readable medium.

Each function of the ADB control unit 47 and the light source control unit 453 or the integrated control unit 473 described above may be implemented by a dedicated integrated circuit capable of executing the computer program such as a micro-controller, an ASIC, or an FPGA. In this case, the computer program is pre-installed in a storage element provided in the dedicated integrated circuit. The storage element is an example of the non-transitory computer readable medium. Each function of the processing unit 131 can also be implemented by a combination of the general-purpose microprocessor and the dedicated integrated circuit.

The present application is based on the priority based on Japanese patent application No. 2022-190138 filed on November 29, 2022 and Japanese patent application No. 2023-106027 filed on June 28, 2023, and all the description contents described in the Japanese patent applications are incorporated.

## Claims

1. A control device for a vehicle lamp,

    the vehicle lamp comprising:

        a plurality of light sources arranged in a matrix;
        a temperature acquisition unit configured to acquire a temperature of at least part of the plurality of light sources;
        a control unit configured to individually control lighting luminance of the plurality of light sources; and
        the control device,

    the control device comprising:

        an image generation unit configured to output an image in which the lighting luminance of each of the plurality of light sources arranged in the matrix is expressed as brightness of a pixel corresponding to each of the light sources; and
a storage unit configured to store a first image indicating a first luminance distribution of the lighting luminance, and a second image having average luminance lower than average luminance of the first image and indicating a second luminance distribution of the lighting luminance,

wherein the control unit is configured to individually control the lighting luminance of the plurality of light sources based on the image output from the image generation unit, and
wherein the image generation unit is configured to:

output the first image to the control unit when the temperature acquired by the temperature acquisition unit is equal to or lower than a first threshold; and
start derating control when the temperature acquired by the temperature acquisition unit is higher than the first threshold, the derating control comprising generating a composite image based on the first image and the second image in accordance with the temperature and outputting the composite image to the control unit.

2. The control device according to claim 1,
wherein the image generation unit is configured to change a composite ratio in accordance with the temperature, the composite ratio being a degree of influence of the first image in the composite image.

3. The control device according to claim 2,
wherein when the temperature is higher than the first threshold, the image generation unit is configured to increase the composite ratio as the temperature is lower.

4. A control device for a vehicle lamp,

the vehicle lamp comprising:

a plurality of light sources arranged in a matrix;
a temperature acquisition unit configured to acquire a temperature of at least part of the plurality of light sources;
the control device configured to individually control lighting luminance of the plurality of light sources; and
a storage unit configured to store an image in which the lighting luminance of each of the plurality of light sources arranged in the matrix is expressed as brightness of a pixel corresponding to each of the light sources,

the storage unit being configured to store:

a first image indicating a first luminance distribution of the lighting luminance, and a second image having average luminance lower than average luminance of the first image and indicating a second luminance distribution of the lighting luminance,

the control device being configured to:

turn on the plurality of light sources with the first luminance distribution indicated by the first image when the temperature acquired by the temperature acquisition unit is equal to or lower than a first threshold; and
start derating control when the temperature acquired by the temperature acquisition unit is higher than the first threshold, the derating control comprising generating a composite image based on the first image and the second image in accordance with the temperature and turning on the plurality of light sources with a luminance distribution indicated by the composite image.

5. The control device according to claim 4,
wherein the control device is configured to change a composite ratio in accordance with the temperature, the composite ratio being a degree of influence of the first image in the composite image.

6. The control device according to claim 5,
wherein when the temperature is higher than the first threshold, the control device is configured to increase the composite ratio as the temperature is lower.

7. The control device according to claim 1 or 4,

wherein the vehicle lamp is configured to form a specific light distribution pattern,
wherein when a central position positioned at a central portion of the light distribution pattern and a peripheral position positioned at a peripheral portion of the light distribution pattern are defined,
a difference in brightness between a first pixel present at the central position in the first image and a first pixel present at the central position in the composite image is smaller than a difference in brightness between a second pixel present at the peripheral position in the first image and a second pixel present at the peripheral position in the composite image.

8. The control device according to claim 1 or 4, wherein the control device is configured to:

turn on the plurality of light sources with a luminance distribution indicated by the composite image in accordance with the temperature when the temperature acquired by the temperature acquisition unit is higher than the first threshold and equal to or lower than a second threshold higher than the first threshold; and

turn on the plurality of light sources with the second luminance distribution indicated by the second image when the temperature acquired by the temperature acquisition unit is higher than the second threshold.

9. The control device according to claim 1, wherein after the derating control is started, when the temperature acquired by the temperature acquisition unit is higher than a third threshold, the image generation unit is configured to generate the composite image such that the temperature decreases.

10. The control device according to claim 9, wherein the third threshold is the first threshold.

11. The control device according to claim 9, wherein a composite image I(t) generated at time t is a composite image of an immediately previously generated composite image I(t-1) and a third image having average luminance lower than that of the composite image I(t-1).

12. The control device according to claim 11, wherein the third image is the second image.

13. The control device according to claim 9, wherein after the derating control is started, when the temperature acquired by the temperature acquisition unit is lower than a fourth threshold that is lower than the third threshold, the image generation unit is configured to generate the composite image such that the temperature rises.

14. The control device according to claim 13, wherein a composite image I(t) generated at time t is a composite image of an immediately previously generated composite image I(t-1) and a fourth image having average luminance higher than that of the composite image I(t-1).

15. The control device according to claim 14, wherein the fourth image is the first image.

16. A computer program executable by a control device mounted on a vehicle lamp,

the vehicle lamp comprising:

a plurality of light sources arranged in a matrix;

a temperature acquisition unit configured to acquire a temperature of at least part of the plurality of light sources;

a control unit configured to individually control lighting luminance of the plurality of light sources; and

the control device,

the computer program, when executed, causing the control device to:

output an image in which the lighting luminance of each of the plurality of light sources arranged in the matrix is expressed as brightness of a pixel corresponding to each of the light sources;

individually control the lighting luminance of the plurality of light sources based on the output image;

store a first image indicating a first luminance distribution of the lighting luminance, and a second image having average luminance lower than average luminance of the first image and indicating a second luminance distribution of the lighting luminance;

output the first image to the control unit when the temperature acquired by the temperature acquisition unit is equal to or lower than a first threshold; and

start derating control when the temperature acquired by the temperature acquisition unit is higher than the first threshold, the derating control comprising generating a composite image based on the first image and the second image according to the temperature and outputting the composite image to the control unit.

17. A vehicle lamp comprising:

a plurality of light sources arranged in a matrix;

a temperature acquisition unit configured to acquire a temperature of at least part of the plurality of light sources;

an image generation unit configured to output an image in which the lighting luminance of each of the plurality of light sources arranged in the matrix is expressed as brightness of a pixel corresponding to each of the light sources;

a control unit configured to individually control the lighting luminance of the plurality of light sources based on the image output from the image generation unit; and

a storage unit configured to store a first image indicating a first luminance distribution of the lighting luminance, and a second image having average luminance lower than average luminance of the first image and indicating a second luminance distribution of the lighting luminance, wherein the image generation unit is configured to:

output the first image to the control unit when the temperature acquired by the temperature acquisition unit is equal to or lower than a first threshold; and
start derating control when the temperature acquired by the temperature acquisition unit is higher than the first threshold, the derating control comprising generating a composite image based on the first image and the second image in accordance with the temperature and outputting the composite image to the control unit.

EP 4 628 361 A1

FIG. 1

HEADLAMP — 4

VEHICLE CONTROL UNIT — 3

LAMP CONTROL UNIT — 41

LOW-BEAM LAMP — 43

CAMERA — 6

2 (1)

ADB CONTROL UNIT — 47

IMAGE GENERATION UNIT — 471

STORAGE UNIT — 472

HIGH-BEAM LAMP — 45

LIGHT SOURCE — 451

SENSOR — 452

LIGHT SOURCE CONTROL UNIT — 453

FIG. 2

FIG. 3

FIG. 4

FIG. 5

D1

I1

X

X

Y

Y

F1 (x, y)

F3 (xc, yc)

EP 4 628 361 A1

*FIG. 6*

F2 (x, y)

F3 (xe, ye)

*FIG. 7*

*FIG. 8*

START

ACQUIRE TEMPERATURE OF LIGHT SOURCES — STEP1

STEP2
IS TEMPERATURE T OF LIGHT SOURCES FIRST THRESHOLD OR LESS?

YES / NO

STEP4
IS TEMPERATURE T OF LIGHT SOURCES SECOND THRESHOLD OR LESS?

NO

STEP3
TURN ON LIGHT SOURCES BASED ON FIRST IMAGE

YES

SPECIFY COMPOSITE RATIO FROM TEMPERATURE — STEP5

GENERATE COMPOSITE IMAGE USING FIRST IMAGE, SECOND IMAGE, AND COMPOSITE RATIO — STEP6

STEP8
TURN ON LIGHT SOURCES BASED ON SECOND IMAGE

TURN ON LIGHT SOURCES BASED ON COMPOSITE IMAGE — STEP7

END

FIG. 9

FIG. 10

EP 4 628 361 A1

## FIG. 11

```
                    ┌─────────────┐
                    │    START    │
                    └──────┬──────┘
                           │
                           ▼                STEP11
                    ╱─────────────╲
          YES      ╱   T(t)>TH3?    ╲
     ◄────────────◄                  ╲
                    ╲               ╱
                     ╲─────────────╱
                           │ NO
                           │
                           ▼                STEP14
                    ╱─────────────╲
                   ╱   T(t)<TH4?    ╲      YES
                   ╲                 ╲──────────────►
                    ╲               ╱
                     ╲─────────────╱
                           │ NO
```

|  STEP12  |  STEP16  |  STEP15  |
|----------|----------|----------|
| $Iref(t)=I_3$ | $Iref(t)=Iref(t-1)$ | $Iref(t)=I_4$ |

STEP13

$$I(t)=\gamma \times I(t-1)+\delta \times Iref$$

```
                    ┌─────────────┐
                    │     END     │
                    └─────────────┘
```

FIG. 12

# INTERNATIONAL SEARCH REPORT

| International application No. |
|---|
| **PCT/JP2023/042180** |

**A. CLASSIFICATION OF SUBJECT MATTER**

*B60Q 1/04*(2006.01)i; *B60Q 1/14*(2006.01)i; *F21S 41/143*(2018.01)i; *F21S 41/153*(2018.01)i; *F21S 41/663*(2018.01)i; *F21V 23/00*(2015.01)i; *F21W 102/155*(2018.01)n; *F21Y 115/10*(2016.01)n
FI: B60Q1/04 E; B60Q1/14 A; B60Q1/14 D; B60Q1/14 Z; F21S41/143; F21S41/153; F21S41/663; F21V23/00 140; F21W102:155; F21Y115:10

According to International Patent Classification (IPC) or to both national classification and IPC

**B. FIELDS SEARCHED**

Minimum documentation searched (classification system followed by classification symbols)

B60Q1/00-1/56, F21K 9/00-9/90, F21S 2/00-45/70, H05B 39/00-39/10, 45/00-45/58, 47/00-47/29

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-22809 A (KOITO MANUFACTURING CO., LTD.) 07 February 2022 (2022-02-07) entire text, all drawings | 1-17 |
| A | JP 2007-55424 A (TOYOTA MOTOR CORP.) 08 March 2007 (2007-03-08) entire text, all drawings | 1-17 |
| A | WO 2018/173726 A1 (KONICA MINOLTA, INC.) 27 September 2018 (2018-09-27) entire text, all drawings | 1-17 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/042180** |

| Patent document cited in search report | | | Publication date (day/month/year) | Patent family member(s) | Publication date (day/month/year) |
| --- | --- | --- | --- | --- | --- |
| JP | 2022-22809 | A | 07 February 2022 | (Family: none) | |
| JP | 2007-55424 | A | 08 March 2007 | (Family: none) | |
| WO | 2018/173726 | A1 | 27 September 2018 | (Family: none) | |

Form PCT/ISA/210 (patent family annex) (January 2015)

**EP 4 628 361 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016185717 A
- JP 2022190138 A
- JP 2023106027 A